(19) Europäisches Patentamt / European Patent Office / Office européen des brevets

(11) **EP 3 020 609 B1**

## (12) EUROPEAN PATENT SPECIFICATION

(45) Date of publication and mention
of the grant of the patent:
**08.04.2020  Bulletin 2020/15**

(51) Int Cl.:
**B60T 8/1755** (2006.01)

(21) Application number: **14193418.2**

(22) Date of filing: **17.11.2014**

(54) **A VEHICLE SAFETY SYSTEM**

FAHRZEUGSICHERHEITSSYSTEM

SYSTÈME DE SÉCURITÉ DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.05.2016  Bulletin 2016/20**

(73) Proprietor: **Veoneer Sweden AB
447 83 Vårgårda (SE)**

(72) Inventor: **Murray, Shane Michael
Yokohama-shi, Kanagawa (JP)**

(74) Representative: **Beattie, Alex Thomas Stewart
Forresters IP LLP
Skygarden
Erika-Mann-Strasse 11
80636 München (DE)**

(56) References cited:
**EP-A1- 1 995 705          EP-A2- 1 997 704
DE-A1-102007 027 644    DE-A1-102008 002 171**

**Description**

This invention relates to a vehicle safety system, and in particular concerns a system for controlling the operation of an active braking system of a vehicle.

Many modern vehicles are equipped with active braking systems which are operable to apply a braking force to one or more wheels of the vehicle automatically, i.e. without the driver having taken any action to initiate the braking. An active braking system may be engaged if, for example, signals from vehicle sensors indicate that the vehicle is on a course to collide with an object, and braking must be applied immediately if the collision is to be avoided.

EP2051886 discloses a system in which the steering action applied by the driver is monitored before and during an active braking process. If a potentially dangerous situation arises, it appears that the driver steers the vehicle in such a way as to avoid the dangerous situation, then active braking is not applied, or (if active braking has already begun) is deactivated.

US7729840 B2 discloses a vehicle brake control system and method. A vehicle brake control system is provided with a preceding object detecting section, a running condition detection section, a steering actuation state detecting section, a braking force detecting section, a preceding object avoidability determining section and a brake force control section. The preceding object avoidability determining section determines a possibility of avoiding the preceding object by steering and reducing the current brake force acting on the host vehicle based on the position of the preceding object, the running condition of the host vehicle, the braking force applied to the host vehicle and the steering wheel actuation state that are detected. The braking force control section reduces the current braking force applied by the host vehicle braking system when the preceding object avoidability determining section determines that the preceding object can be avoided by steering and reducing the current brake force acting on the host vehicle.

It is an object of the present invention to provide an improved system of this type.

Accordingly, one aspect of the present invention provides a vehicle safety system comprising: a steering angle sensor, to sense an angular position of the steering wheel and a rate of turning of the steering wheel; a steering angle prediction module connected to receive signals from the steering angle sensor, and adapted to determine, from the sensed angular position and rate of turning of the steering wheel, a predicted future angular position of the steering wheel at a future time; an active braking system, which is operable to apply a braking force to one or more wheels of the vehicle without the driver having taken any action to initiate the braking; and an evaluation module adapted to compare the predicted future angular position of the steering wheel against a threshold, and to generate a signal to cause suppression of the active braking system if the predicted future angular position of the steering wheel is greater than the threshold.

Conveniently, the active braking system comprises: one or more sensors to determine the position of an object ahead of the vehicle and generate sensor signals; and an active braking module to receive the sensor signals and to determine, based at least partly on the sensor signals, whether a braking signal should be generated to cause the automatic braking system to cause a braking force or an additional braking force to be applied to one or more wheels of the vehicle to help the vehicle avoid the object.

Conveniently, the steering angle prediction module predicts the future angular position of the steering wheel at the future time by assuming that the sensed rate of turning of the steering wheel will remain constant.

Advantageously, the steering angle sensor further senses the rate of change of the rate of turning of the steering wheel, and the steering angle prediction module predicts the future angular position of the steering wheel at the future time by assuming that the sensed rate of change of the rate of turning of the steering wheel will remain constant.

Preferably, the threshold is substantially constant.

Conveniently, the threshold is dependent upon the speed of the vehicle.

Advantageously, the threshold is dependent upon one or more conditions of the surroundings of the vehicle.

Another aspect of the present invention provides a method of operating a vehicle, comprising the steps of: sensing an angular position of the steering wheel and a rate of turning of the steering wheel; from the sensed angular position and rate of turning of the steering wheel, predicting a predicted future angular position of the steering wheel at a future time; comparing the predicted future angular position of the steering wheel against a threshold; and generating a signal to cause suppression of an active braking system, which is operable to apply a braking force to one or more wheels of the vehicle without the driver having taken any action to initiate the braking, if the predicted future angular position of the steering wheel is greater than the threshold.

Preferably, the method further comprises the step of deactivating or suppressing an automatic control arrangement, which is configured to control one or more systems of the vehicle, in response to the signal

A further aspect of the present invention provides a computer program comprising computer program code adapted to perform all of the steps of the above when the program is run on a computer.

Another aspect of the present invention provides a computer program according to the above, embodied on a computer-readable medium.

In order that the present invention may be more readily understood, embodiments thereof will now be described, by way of example, with reference to the accompanying drawings, in which:

Figures 1 and 2 show a vehicle in different stages of an overtaking manoeuvre;

Figures 3 and 4 are schematic representations of steering angle prediction processes used in embodiments of the invention; and

Figures 5 and 6 are schematic representations of decision processes used in embodiments of the invention.

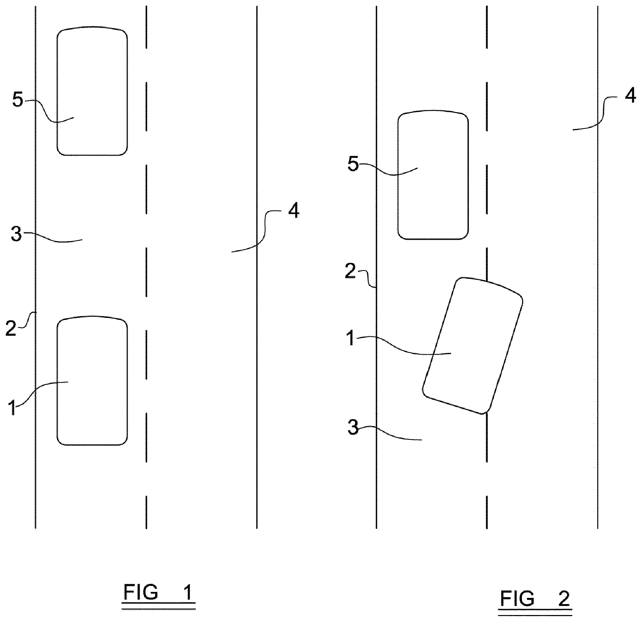

With reference firstly to figure 1, a vehicle 1 is shown driving along a road 2.

The vehicle 1 is equipped with several vehicle sensors, including a speed sensor, to detect the current speed of the vehicle 1. As is known in the art, the speed sensor may include one or more sensors to determine the rate of rotation of one or more wheels of the vehicle 1. Alternatively, or in addition, the speed may be determined more directly, through the use of a positioning system such as a GPS system.

The vehicle sensors further include a steering angle sensor, to detect a current angle of steering of the vehicle 1. This may include one or more sensors to determine the angle at which the steering wheel of the vehicle 1 is set, and may alternatively, or in addition, include sensors to determine the angle at which wheels of the vehicle 1 that are involved in steering (typically, the front wheels) are set with respect to the longitudinal axis of the vehicle 1. The steering angle sensor is also able to determine the rate at which the steering wheel is being turned.

The vehicle sensors also, in some embodiments, include a yaw rate sensor. As will be understood by those skilled in the art, the rate of yaw of the vehicle 1 is the rate at which the vehicle 1 is turning about an axis passing vertically through the centre of gravity of the vehicle 1. Yaw sensors may, as will be understood by the skilled reader, comprise inertial sensors which measure the acceleration arising from rotation of the vehicle 1 around the yaw axis.

The vehicle 1 is, as discussed above, also equipped with an active braking arrangement, which is operable to assume control of, or exert some influence over, the braking of the vehicle if it is determined that this control may avoid, or minimise the harm arising from, a hazardous situation.

The vehicle 1 is further equipped with a sensing arrangement to detect the presence, and also relative speed and position, of objects around the vehicle 1. As is known in the art, the sensing arrangement may include one or more cameras, or other devices such as radar and/or lidar arrangements, to gather images or other data relating to regions around the vehicle. The images/data can then be analysed to identify relevant objects. The cameras or other devices are preferably mounted to analyse one or more regions ahead of the vehicle, but in addition cameras or other devices may be mounted to analyse areas to one or both sides of the vehicle and/or to the rear of the vehicle. It is also envisaged that vehicle-to-vehicle communication, rather than direct sensing, may be used to provide the vehicle with information as to the relative position and speed of nearby vehicles.

In the situation shown in figure 1, the vehicle is driving on the left-hand side of the road. The situation shown is in a country where vehicles are required to drive on the left, and so the left-hand lane 3 of the road 2 comprises a regular driving lane. The right-hand lane 4 comprises an oncoming/overtaking lane.

A further vehicle 5 is driving on the road, ahead of the vehicle 1, and is also in the regular driving lane 3. The further vehicle 5 is travelling more slowly than the vehicle 1, and the driver of the vehicle 1 wishes to overtake the further vehicle 5.

It is common practice when overtaking to drive one's vehicle to a position which is close behind the vehicle that is to be overtaken, with a speed closely matched to that of the further vehicle. When there is a clear stretch of road ahead in the oncoming/overtaking lane, it is possible to accelerate and steer around the further vehicle, thus pulling out into the oncoming/overtaking lane, and drive past the further vehicle.

Figure 2 shows a stage during this overtaking manoeuvre, with the vehicle 1 close behind the other vehicle 5.

A problem with prior art active braking systems is that, when a manoeuvre of this type is being performed, active braking can be engaged when it is not wanted by the driver. Immediately prior to pulling out into the oncoming/overtaking lane 4, the vehicle 1 will drive up close behind the further vehicle 5, travelling at a speed greater than that of the further vehicle 5, as shown in figure 2. When applying an active braking algorithm, it can be very difficult for the algorithm to distinguish between this situation and a situation where the driver of the vehicle 1 is not paying attention, or has fallen asleep, and will crash into the rear of the further vehicle 5.

This difficulty is compounded by the fact that, until shortly before the driver pulls out into the oncoming/overtaking lane 4, the vehicle 1 is on a trajectory to collide with the further vehicle 5, even if the current steering action of the driver is taken into account. An overtaking manoeuvre is often characterised by driving up quickly behind another vehicle, and effectively swerving at the last moment to steer around the other vehicle. Until this last moment, the trajectory of the vehicle is effectively a collision course with the other vehicle.

In embodiments of the invention, the vehicle's processor has a steering angle prediction unit (which may comprise software running on a separate physical processor, or alternatively a module running on a processor which is also carrying out other tasks and processes). The steering angle prediction unit uses information from the steering wheel angle sensor to determine a predicted future steering angle.

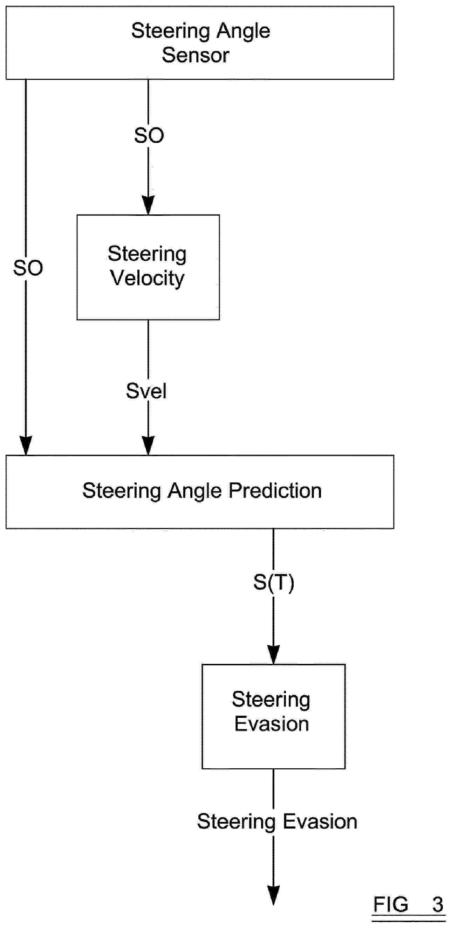

In a first example, illustrated schematically in figure 3, information from the steering angle sensor is used to determine a starting angle, which is the angle S(0) at which the steering wheel is set at the present time, and also the rate $S_{vel}$ at which the steering wheel is being turned. For a time T in the future, the predicted steering angle S(T) will then be

$$S(T) = S(0) + T.S_{vel}$$

In other words, in this embodiment it is assumed that the driver will continue to turn the steering wheel at the current rate.

It is expected that a prediction of this kind can be expected to be accurate over only a short period, for instance 1 - 2 seconds. Beyond this, it can be expected that the driver will take action to make further corrections to the course of the vehicle. It is therefore preferred that a prediction is made for a time T which is no longer than 2 seconds from the current time. It is also preferred that the prediction is made for a time T which is at least 0.5 seconds, or at least 1 second, from the current time. In preferred embodiments, the prediction is made for a time T which is exactly or around 0.5 seconds. In further embodiments, the time T may be adapted for the driver (or for each driver of the vehicle), based statistically on the length of time for which the driver carries out turning manoeuvres (for instance, the lengths of time for which the driver carries out turning manoeuvres many be analysed, and an average of these times calculated). In yet further embodiments, the length of time for which the driver carries out turning manoeuvres at different speeds I analysed, and the time T then varies based upon the speed of the vehicle.

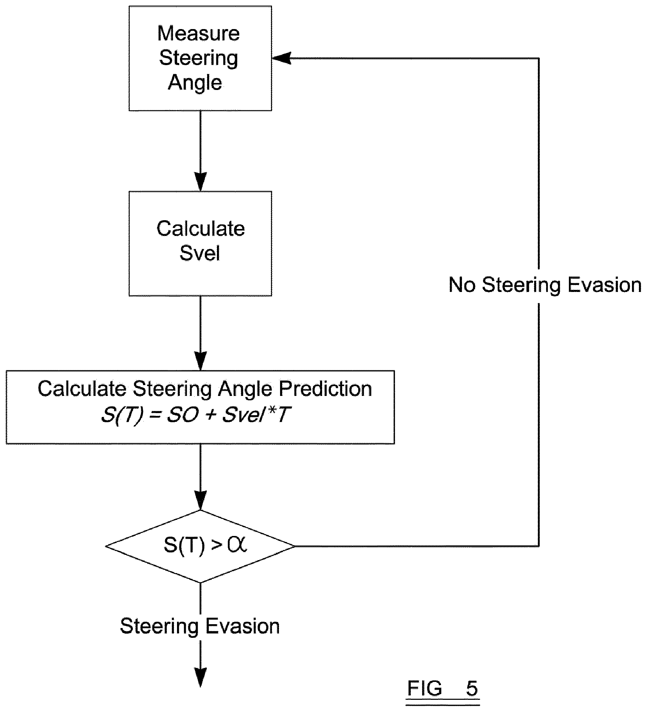

In preferred embodiments, the predicted future steering angle S(T) at time T is compared against a first threshold $\alpha$, where $\alpha$ is the steering angle (either clockwise or anti-clockwise) from the straight ahead position (i.e. the angle at which the steering wheel is set for the vehicle 1 to be driven in a straight line). If the predicted steering angle is greater than this threshold (i.e. S(T) > $\alpha$), which may be adjusted based on the speed of the vehicle (as discussed in more detail below), then the system determines that the driver is steering to avoid a collision (for instance, by steering round a further vehicle in the course of overtaking the further vehicle), and a signal is generated which causes the active braking system of the vehicle to be suppressed. If, on the other hand, the predicted steering angle is less than or equal to this threshold (i.e. S(T) ≤ $\alpha$) then the system determines that the driver is not performing a steering action to avoid a collision, and the active braking system operates as normal (i.e. the signal is not generated). This is shown schematically in figure 5.

This analysis is based on the understanding that, if the steering wheel is being turned to be set at a relatively sharp angle, the driver is likely to be performing an evasive manoeuvre, as the angle of turn of the vehicle 1 that will result from the steering action is too sharp to be a likely result of normal driving of the vehicle. Therefore it can be seen that the decision to suppress the automatic braking should be performed based on steering angle and steering velocity used in combination. If only steering angle is compared to a threshold, then the suppression will be too slow and the automatic braking may not be suppressed when the driver is able to avoid an obstacle via steering action. Additionally, on a constant bend a calculation suppressing the automatic braking using steering angle only could cancel the automatic braking due to the fact that it needs a lower threshold since steering velocity is not used, i.e. the driver is not attempting evasion, simply holding course. However if only steering velocity is compared to a threshold, then the suppression may be too fast, and the automatic braking may be suppressed when the driver cannot actually avoid collision with the obstacle.

In some embodiments, the threshold $\alpha$ is fixed, and the threshold may for instance be exactly or approximately 100 degrees.

In other embodiments, the threshold $\alpha$ is dependent upon the speed of the vehicle. Firstly, for a given steering angle the vehicle will turn less at high speeds as a result of tyre slip. Secondly, it is more common to turn the steering wheel through a large angle at low speed, for instance during a turning or parking manoeuvre. However, despite this, it will still be desirable to suppress the active braking at low speeds if it appears that the driver is performing a steering action that will successfully avoid an obstacle. Overall, in preferred embodiments the threshold angle $\alpha$ is lower at lower speeds.

In an embodiment, the threshold angle $\alpha$ may be 90° when the vehicle is travelling at 30kph, 100° when the vehicle is travelling at 60kph, and 110° when the vehicle is travelling at 90kph. The skilled reader will understand how the threshold angle $\alpha$ may be extrapolated/interpolated for other speeds. In this example the threshold angle $\alpha$ varies in a linear manner with speed, although it should be understood that this need not be the case and the threshold angle $\alpha$ may, for example, be proportional to the square of the velocity.

In some embodiments, the slip angle of one or more of the vehicle's wheels may be determined or approximated. As the skilled reader will be aware, the slip angle is a measure of the difference between the direction in which a wheel is pointing and the direction in which it is actually travelling, and is indicative of the coefficient of friction between the vehicle's tyres and the road surface. The slip angle may be used to calculate the level of the threshold $\alpha$, for example,

according to the following formula:

$$\text{Threshold} = \text{Base\_Threshold} + \text{Slip\_Angle\_Degrees} * \text{Tuning\_Constant\_K}$$

Where the slip angle (caused by centripetal force overcoming tyre friction) for a particular steering angle may be measured, or estimated, to increase based on vehicle speed, and the tuning constant K is adjusted to match the vehicle's handling characteristics.

Further, the threshold α may (in addition to, or as an alternative to, being dependent upon vehicle speed) depend on external driving conditions, such as the condition of the road surface, the presence of water or ice on the road, or the ambient temperature. If the driving conditions are good (e.g. the ambient temperature is well above freezing, and the vehicle is being driven along a dry road which is in a good condition), then the threshold α may be set to be relatively low, since the vehicle will react well to a steering action performed by the driver. However, if the driving conditions are such that the vehicle is more likely to lose traction during a turn (e.g. the ambient temperature is near or below freezing, there is ice or water on the road surface, or the road surface is in a poor condition, for instance having loose stones or gravel thereon), then the threshold α may be set to be higher, since the vehicle's tyres will slip on the road and hence a greater steering angle will be needed to produce the same vehicle yaw rate.

Information from one or more camera arrangements may be used to gain information about the driving conditions. Information may also be gained from one or more thermometers or rain sensors of the vehicle, and/or from weather/road surface information that is communicated to the vehicle from a remote control centre or other service. The skilled reader will realise how this may be achieved.

By predicting the future position of the steering wheel, the threshold α can be set to a relatively high level, compared to a system which only applies a threshold to the current position of the steering wheel. To take the example of the overtaking manoeuvre described above, when the vehicle 1 is driven to a position close behind the further vehicle 5 and begins to steer, the steering angle *at that moment* is quite low, and is not significantly different from the steering angle that would be encountered if the driver was simply not paying attention and on a course to collide with the further vehicle 5. A system which analyses the current steering angle must therefore apply a low threshold, in order to distinguish between the two situations.

By contrast, if the future position of the steering wheel is determined in the same circumstances, as the vehicle 1 is driven to a position close behind the further vehicle 5 and begins to steer to perform an overtaking manoeuvre, the future steering angle that can be determined by the processor is significantly different from the future angle that will be determined if the driver is not commencing an overtaking manoeuvre and is on a course to collide with the further vehicle 5. Therefore, in embodiments of the invention a higher (and hence safer) threshold can be applied to the future steering angle to distinguish between the two situations.

This will have the advantage of providing a clearer and more reliable determination of whether the active braking system should be suppressed. An earlier determination is also likely to be provided, because the system is able to make an advance prediction of the future steering angle.

Further, conventional systems which analyse only the current steering angle can be prone to error where a vehicle travels around a long and fairly sharp bend, for instance as may be encountered in a junction between a motorway and a road that passes along a bridge over the motorway. If a vehicle is driven along a road of this type, the processor may determine that the steering angle is above the threshold, and active braking may therefore be suppressed inappropriately. Because a higher threshold can be set in embodiments of the invention, errors of this type are less likely to occur.

At low steering angles, embodiments of the invention will also be more robust than a system which relies on steering rate alone, since the initial steering angle is taken into account, and so the system will not suppress the active braking system only in response to the steering wheel being turned relatively quickly, where this will not (within the time over which the prediction takes place) lead to a sharp angle of steering. As explained above, it can therefore be seen that the decision to suppress the automatic braking should be performed based on steering angle and steering velocity used in combination. If only steering angle is compared to a threshold, then the suppression will be too slow and may not be effective when the driver is able to avoid an obstacle via steering action, additionally on a constant bend a calculation suppressing using steering angle only could be cancelled due to the fact that a lower threshold is needed since steering velocity is not used, i.e. the driver is not attempting evasion, simply holding course. However if only steering velocity is compared to a threshold, then the suppression may be too fast, and the automatic braking may be suppressed when the driver cannot actually avoid collision with the obstacle.

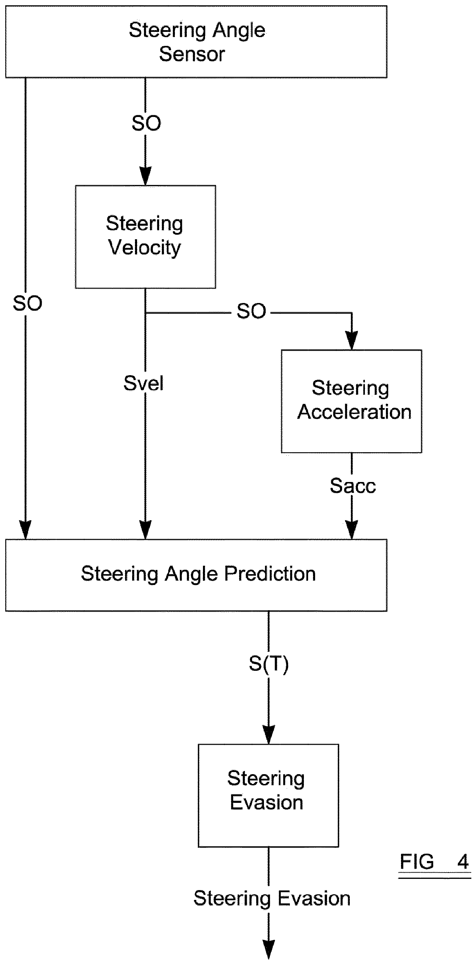

In a further embodiment, shown in figure 4, the steering angle sensor is used to determine a starting angle, which is the angle $S(0)$ at which the steering wheel is set at the present time, the rate $S_{vel}$ at which the steering wheel is being turned, and also the rate of acceleration $S_{acc}$ of the turning of the steering wheel. For a time T in the future, the predicted steering angle $S(T)$ will then be

$$S(T) = S(0) + T.S_{vel} + \frac{1}{2}.S_{acc}.T^2$$

In other words, in this embodiment it is assumed that the driver will turn the steering wheel and continue to maintain the current rate of acceleration. Because this prediction uses position and both acceleration and velocity, it will generally produce a higher result than a prediction based only on position and velocity.

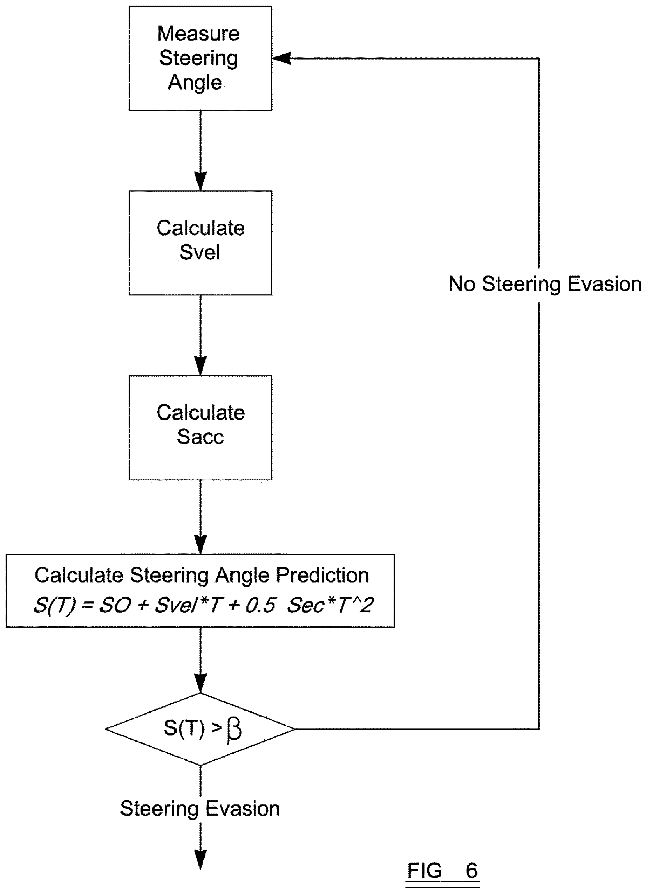

This predicted steering angle is compared against a further threshold β. Once again, if the predicted steering angle is greater than this threshold (i.e. $S(T) > \beta$) then the system determines that the driver is steering to avoid a collision (for instance, by steering round a further vehicle in the course of overtaking the further vehicle), and the active braking system of the vehicle is suppressed. If, on the other hand, the predicted steering angle is less than or equal to this threshold (i.e. $S(T) \leq \beta$) then the system determines that the driver is not performing a steering action to avoid a collision, and the active braking system operates as normal. This is shown schematically in figure 6.

In preferred embodiments of the invention, the further threshold β is greater than the threshold α. This is because, if the rate of acceleration of turning of the steering wheel is taken into account, a more accurate prediction of larger future steering angles can be made. For the reasons discussed above, this higher threshold allows a more robust and reliable determination to be made as to whether the active braking system should be suppressed.

As above, the further threshold β may be fixed, in which case the further threshold β may be set at exactly or around 110°. Alternatively, the further threshold β may vary in dependence upon the vehicle's speed. For instance, the further threshold β may be 100° when the vehicle is travelling at 30kph, 110° when the vehicle is travelling at 60kph, and 120° when the vehicle is travelling at 90kph. The skilled reader will again understand how the further threshold angle β may be extrapolated/interpolated for other speeds. The further threshold angle β may again vary in a linear manner with speed, although it should be understood that this need not be the case and the further threshold angle β may, for example, be proportional to the square of the velocity.

As discussed above, the threshold may also vary depending on the surrounding driving conditions and/or the current detected slip angle.

The examples above involve, in accordance with the invention, an active braking system. In further examples, an active steering system may be suppressed or deactivated if it is determined (in the same way as discussed above) that the driver is performing an evasion or overtaking manoeuvre. The skilled reader will be aware of the operation of active steering systems, and how they may be suppressed or deactivated in a system of this kind.

Further examples not embodying the invention can also be used in conjunction with a cruise control system.

In many adaptive cruise control systems, the distance to a further vehicle ahead of the vehicle is determined, for instance using an on-board radar system, and the speed of the vehicle is regulated to maintain a target distance between the vehicle and the further vehicle (sometimes known as "radar lock"). As is known in the art, this target distance may vary depending on the speed of the vehicles (safe distances between vehicles are sometimes based on the difference in time between the two vehicles passing the same stationary point, and so as the vehicles travel faster the safe distance between the vehicles increases).

In examples, if the predicted future steering angle (calculated according to any of the approaches set out above) is above a threshold then the radar lock of the cruise control system is deactivated, as it is determined that the driver of the vehicle may wish to perform an overtaking manoeuvre, and so the radar lock is no longer appropriate.

The threshold against which the predicted future steering angle is compared for these purposes may be the same as any of those described above. Alternatively, the threshold may be lower, as it likely that the steering performed at the distance behind a further vehicle that is set by a cruise control system will be less sharp than that performed later on in an overtaking manoeuvre. Also, the switching off of a radar lock is less serious, with regard to vehicle occupant safety, than the suppression of an active braking system, and so a lesser degree of certainty is likely to be acceptable.

It will be understood that the present invention provides a robust and reliable system for determining when a vehicle's active braking system should be activated, suppressed or disengaged.

When used in this specification and claims, the terms "comprises" and "comprising" and variations thereof mean that the specified features, steps or integers are included. The terms are not to be interpreted to exclude the presence of other features, steps or components.

Various features and advantages of the invention are set forth in the following claims.

**Claims**

1. A vehicle safety system comprising:

a steering angle sensor, to sense an angular position of the steering wheel and a rate of turning of the steering wheel;

a steering angle prediction module connected to receive signals from the steering angle sensor, and adapted to determine, from the sensed angular position and rate of turning of the steering wheel, a predicted future angular position of the steering wheel at a future time;

an active braking system, which is operable to apply a braking force to one or more wheels of the vehicle without the driver having taken any action to initiate the braking;

**characterized by**

an evaluation module adapted to compare the predicted future angular position of the steering wheel against a threshold, and to generate a signal to cause suppression of the active braking system if the predicted future angular position of the steering wheel is greater than the threshold.

2. A vehicle safety system according to claim 1, wherein the active braking system comprises:

one or more sensors to determine the position of an object ahead of the vehicle and generate sensor signals; and

an active braking module to receive the sensor signals and to determine, based at least partly on the sensor signals, whether a braking signal should be generated to cause the automatic braking system to cause a braking force or an additional braking force to be applied to one or more wheels of the vehicle to help the vehicle avoid the object.

3. A vehicle safety system according to any preceding claim, wherein the steering angle prediction module predicts the future angular position of the steering wheel at the future time by assuming that the sensed rate of turning of the steering wheel will remain constant.

4. A vehicle safety system according to any one of claims 1 to 3, wherein:

the steering angle sensor further senses the rate of change of the rate of turning of the steering wheel; and

the steering angle prediction module predicts the future angular position of the steering wheel at the future time by assuming that the sensed rate of change of the rate of turning of the steering wheel will remain constant.

5. A vehicle safety system according to any preceding claim, wherein the threshold is substantially constant.

6. A vehicle safety system according to any one of claims 1 to 4, wherein the threshold is dependent upon the speed of the vehicle.

7. A vehicle safety system according to any one of claims 1 to 4 and 6, wherein the threshold is dependent upon one or more conditions of the surroundings of the vehicle.

8. A method of operating a vehicle comprising the steps of:

sensing an angular position of the steering wheel and a rate of turning of the steering wheel;

from the sensed angular position and rate of turning of the steering wheel, predicting a predicted future angular position of the steering wheel at a future time;

**characterized by** comparing the predicted future angular position of the steering wheel against a threshold; and generating a signal to cause suppression of an active braking system, which is operable to apply a braking force to one or more wheels of the vehicle without the driver having taken any action to initiate the braking, if the predicted future angular position of the steering wheel is greater than the threshold.

9. A method according to claim 8, further comprising the step of deactivating or suppressing an automatic control arrangement, which is configured to control one or more systems of the vehicle, in response to the signal.

10. A computer program comprising computer program code adapted to perform all of the steps of claim 8 or 9 when the program is run on a computer.

11. A computer program according to claim 10, embodied on a computer-readable medium.

**Patentansprüche**

1. Fahrzeugsicherheitssystem, umfassend:

   einen Lenkwinkelsensor zum Erfassen einer Winkelposition des Lenkrads und einer Drehrate des Lenkrads;
   ein Lenkwinkel-Vorhersagemodul, das angeschlossen ist, um Signale von dem Lenkwinkelsensor zu empfangen, und ausgelegt ist zum Bestimmen, anhand der erfassten Winkelposition und Drehrate des Lenkrads, einer vorhergesagten zukünftigen Winkelposition des Lenkrads zu einem zukünftigen Zeitpunkt;
   ein aktives Bremssystem, das betreibbar ist, um eine Bremskraft auf ein oder mehrere Räder des Fahrzeugs auszuüben, ohne dass der Fahrer jegliche Maßnahmen zum Einleiten des Bremsens ergreifen muss;
   **gekennzeichnet durch**
   ein Auswertungsmodul, das ausgelegt ist, die vorhergesagte zukünftige Winkelposition des Lenkrads mit einer Schwelle zu vergleichen und ein die Unterdrückung des aktiven Bremssystems bewirkendes Signal zu erzeugen, wenn die vorhergesagte zukünftige Winkelposition des Lenkrads größer als die Schwelle ist.

2. Fahrzeugsicherheitssystem nach Anspruch 1, wobei das aktive Bremssystem umfasst:

   einen oder mehrere Sensoren zum Bestimmen der Position eines dem Fahrzeug voraus befindlichen Objekts und Erzeugen von Sensorsignalen; und
   ein aktives Bremsmodul zum Empfangen der Sensorsignale und zum Bestimmen, mindestens teilweise auf Basis der Sensorsignale, ob ein Bremssignal zum Bewirken dessen erzeugt werden sollte, dass das automatische Bremssystem das Ausüben einer Bremskraft oder einer zusätzlichen Bremskraft auf ein oder mehrere Räder des Fahrzeugs bewirkt, um dem Fahrzeug zu helfen, das Objekt zu vermeiden.

3. Fahrzeugsicherheitssystem nach einem vorhergehenden Anspruch, wobei das Lenkwinkel-Vorhersagemodul die zukünftige Winkelposition des Lenkrads zu dem zukünftigen Zeitpunkt durch Annahme dessen vorhersagt, dass die erfasste Drehrate des Lenkrads konstant bleibt.

4. Fahrzeugsicherheitssystem nach einem der Ansprüche 1 bis 3, wobei:

   der Lenkwinkelsensor ferner die Änderungsrate der Drehrate des Lenkrads erfasst; und
   das Lenkwinkel-Vorhersagemodul die zukünftige Winkelposition des Lenkrads zu dem zukünftigen Zeitpunkt durch Annahme dessen vorhersagt, dass die erfasste Änderungsrate der Drehrate des Lenkrads konstant bleibt.

5. Fahrzeugsicherheitssystem nach einem vorhergehenden Anspruch, wobei die Schwelle im Wesentlichen konstant ist.

6. Fahrzeugsicherheitssystem nach einem der Ansprüche 1 bis 4, wobei die Schwelle von der Geschwindigkeit des Fahrzeugs abhängig ist.

7. Fahrzeugsicherheitssystem nach einem der Ansprüche 1 bis 4 und 6, wobei die Schwelle von einer oder mehreren Bedingungen der Umgebung des Fahrzeugs abhängig ist.

8. Verfahren zum Betreiben eines Fahrzeugs, umfassend die folgenden Schritte:

   Erfassen einer Winkelposition des Lenkrads und einer Drehrate des Lenkrads;
   anhand der erfassten Winkelposition und Drehrate des Lenkrads, Vorhersagen einer vorhergesagten zukünftigen Winkelposition des Lenkrads zu einem zukünftigen Zeitpunkt;
   **gekennzeichnet durch** Vergleichen der vorhergesagten zukünftigen Winkelposition des Lenkrads mit einer Schwelle; und
   Erzeugen eines Signals zum Bewirken der Unterdrückung eines aktiven Bremssystems, das betreibbar ist, um eine Bremskraft auf ein oder mehrere Räder des Fahrzeugs auszuüben, ohne dass der Fahrer jegliche Maßnahmen zum Einleiten des Bremsens ergreifen muss, wenn die vorhergesagte zukünftige Winkelposition des Lenkrads größer als die Schwelle ist.

9. Verfahren nach Anspruch 8, ferner umfassend den Schritt des Deaktivierens oder Unterdrückens einer automatischen Steuerungsanordnung, die konfiguriert ist, ein oder mehrere Systeme des Fahrzeugs als Reaktion auf das Signal zu steuern.

**10.** Computerprogramm, umfassend Computerprogrammcode, der ausgelegt ist, sämtliche der Schritte nach Anspruch 8 oder 9 durchzuführen, wenn das Programm auf einem Computer läuft.

**11.** Computerprogramm nach Anspruch 10, das auf einem computerlesbaren Medium verkörpert ist.

**Revendications**

**1.** Système de sécurité pour véhicule, comprenant :

un capteur d'angle de braquage pour détecter une position angulaire du volant de direction et une vitesse de rotation du volant de direction ;
un module de prédiction d'angle de braquage connecté pour recevoir des signaux en provenance du capteur d'angle de braquage et conçu pour déterminer, à partir de la position angulaire et de la vitesse de rotation détectées du volant de direction, une position angulaire future prédite du volant de direction à un moment futur ;
un système de freinage actif, permettant d'appliquer une force de freinage à une ou plusieurs roues du véhicule sans que le conducteur n'ait besoin d'intervenir pour amorcer le freinage ;
le système de sécurité pour véhicule étant **caractérisé par** :
un module d'évaluation conçu pour comparer la position angulaire future prédite du volant de direction à un seuil et pour générer un signal pour provoquer la suppression du système de freinage actif si la position angulaire future prédite du volant de direction est supérieure au seuil.

**2.** Système de sécurité pour véhicule selon la revendication 1, dans lequel le système de freinage actif comprend :

un ou plusieurs capteurs pour déterminer la position d'un objet devant le véhicule et pour générer des signaux de capteur ; et
un module de freinage actif pour recevoir les signaux de capteur et pour déterminer, sur la base, au moins en partie, des signaux de capteur, si un signal de freinage doit être généré pour amener le système de freinage automatique à provoquer l'application d'une force de freinage ou d'une force de freinage supplémentaire à une ou plusieurs roues du véhicule pour aider le véhicule à éviter l'objet.

**3.** Système de sécurité pour véhicule selon l'une quelconque des revendications précédentes, dans lequel le module de prédiction d'angle de braquage prédit la position angulaire future du volant de direction au moment futur en supposant que la vitesse de rotation détectée du volant de direction reste constante.

**4.** Système de sécurité pour véhicule selon l'une quelconque des revendications 1 à 3, dans lequel :

le capteur d'angle de braquage détecte en outre la vitesse de variation de la vitesse de rotation du volant de direction ; et
le module de prédiction d'angle de braquage prédit la position angulaire future du volant de direction au moment futur en supposant que la vitesse de variation détectée de la vitesse de rotation du volant de direction reste constante.

**5.** Système de sécurité pour véhicule selon l'une quelconque des revendications précédentes, dans lequel le seuil est sensiblement constant.

**6.** Système de sécurité pour véhicule selon l'une quelconque des revendications 1 à 4, dans lequel le seuil dépend de la vitesse du véhicule.

**7.** Système de sécurité pour véhicule selon l'une quelconque des revendications 1 à 4 et 6, dans lequel le seuil dépend d'une ou plusieurs conditions de l'environnement de véhicule.

**8.** Procédé de fonctionnement d'un véhicule, comprenant les étapes consistant à :

détecter une position angulaire du volant de direction et une vitesse de rotation du volant de direction ;
à partir de la position angulaire et de la vitesse de rotation détectées du volant de direction, prédire une position angulaire future prédite du volant de direction à un moment futur ;
le procédé étant **caractérisé par** les étapes consistant à :

comparer la position angulaire future prédite du volant de direction à un seuil ; et

générer un signal pour provoquer la suppression d'un système de freinage actif, qui permet d'appliquer une force de freinage à une ou plusieurs roues du véhicule sans que le conducteur n'ait besoin d'intervenir pour amorcer le freinage, si la position angulaire future prédite du volant de direction est supérieure au seuil.

9. Procédé selon la revendication 8, comprenant en outre l'étape consistant à désactiver ou supprimer un agencement de contrôle automatique qui est configuré pour contrôler un ou plusieurs systèmes du véhicule, en réponse au signal.

10. Programme informatique comprenant un code de programme informatique conçu pour réaliser toutes les étapes selon la revendication 8 ou 9 quand le programme est exécuté sur un ordinateur.

11. Programme informatique selon la revendication 10, intégré sur un support lisible par un ordinateur.

FIG 1

FIG 2

FIG  3

FIG 4

```
         ┌──────────┐
         │ Measure  │◄───────────────────────────┐
         │ Steering │                             │
         │  Angle   │                             │
         └──────────┘                             │
              │                                   │
              ▼                                   │
         ┌──────────┐                             │
         │Calculate │          No Steering Evasion│
         │   Svel   │                             │
         └──────────┘                             │
              │                                   │
              ▼                                   │
  ┌──────────────────────────────────┐           │
  │ Calculate Steering Angle Prediction          │
  │   S(T) = SO + Svel*T              │           │
  └──────────────────────────────────┘           │
              │                                   │
              ▼                                   │
           ◄──────────►                           │
            S(T) > α  ─────────────────────────────┘
           ◄──────────►
              │
         Steering Evasion
              │
              ▼
```

$$S(T) = SO + Svel*T$$

$$S(T) > \alpha$$

FIG   5

Measure
Steering
Angle

Calculate
Svel

Calculate
Sacc

Calculate Steering Angle Prediction
$S(T) = SO + Svel*T + 0.5 \ Sec*T^2$

No Steering Evasion

$S(T) > \beta$

Steering Evasion

FIG   6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2051886 A

- US 7729840 B2